Europäisches Patentamt

European Patent Office

Office européen des brevets

(11) Veröffentlichungsnummer: **0 291 846 B1**

(12) **EUROPÄISCHE PATENTSCHRIFT**

(45) Veröffentlichungstag der Patentschrift: **12.08.92**

(51) Int. Cl.5: **C01B 17/66**

(21) Anmeldenummer: **88107586.5**

(22) Anmeldetag: **11.05.88**

(54) **Verfahren zur Herstellung von hochkonzentrierten, pumpbaren, sedimentationsfreien Hydrosulfitpasten.**

(30) Priorität: **19.05.87 DE 3716658**

(43) Veröffentlichungstag der Anmeldung:
**23.11.88 Patentblatt 88/47**

(45) Bekanntmachung des Hinweises auf die
Patenterteilung:
**12.08.92 Patentblatt 92/33**

(84) Benannte Vertragsstaaten:
**BE CH DE ES FR GB IT LI NL SE**

(56) Entgegenhaltungen:
**EP-A- 0 140 218**
**GB-A- 636 713**

(73) Patentinhaber: **BASF Aktiengesellschaft**
**Carl-Bosch-Strasse 38**
**W-6700 Ludwigshafen(DE)**

(72) Erfinder: **Goesele, Wilhelm, Dr.**
**Mandelring 19**
**W-6706 Wachenheim(DE)**
Erfinder: **Nonn, Guenther, Dr.**
**Weisenheimer Strasse 2**
**W-6719 Dackenheim(DE)**
Erfinder: **Schreiner, Siegfried, Dr.**
**Mohnstrasse 39**
**W-6700 Ludwigshafen(DE)**
Erfinder: **Seid, Bernhard**
**Albrecht-Duerer-Ring 28**
**W-6710 Frankenthal(DE)**
Erfinder: **Thiele, Heino, Dr.**
**An der Froschlache 23**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Verfahren zur Herstellung von hochkonzentrierten, pumpbaren, sedimentationsfreien Hydrosulfitpasten aus festen und flüssigen Einsatzstoffen.

Diese Pasten werden in Form wäßriger Lösungen, vorzugsweise als Bleich- und Reduktionsmittel, verwendet, beispielsweise bei der Papierherstellung und in der Textilindustrie als Reduktionsmittel beim Färben.

Derzeit werden hochkonzentrierte, organische Flüssigkeiten enthaltende Natriumdithionitzubereitungen (im weiteren als NDTZ geschrieben) kontinuierlich in Rührwerksmühlen, Zahnkolloidmühlen, etc. hergestellt. Bei der Herstellung der NDTZ wird pulverförmiges Natriumdithionit mit organischen Flüssigkeiten zu einer hochkonzentrierten Paste dispergiert. Durch die Benetzung der Natriumdithionitteilchen mit gegenüber Natriumdithionit inerten organischen Flüssigkeiten wird das pulverförmige Natriumdithionit stabilisiert und vor Selbstentzündung bei Wasserzutritt geschützt. Hierbei wird ein möglichst hoher Pulveranteil angestrebt. Die Viskosität der Paste hängt jedoch nicht nur von der Viskosität der organischen Flüssigkeit ab, sondern auch von der Korngrößenverteilung des eingesetzten Natriumdithionits. Dieses hat je nach Herstellungsverfahren eine mittlere Korngröße von 95 bis 160 $\mu$m. Bei gleichen Mengen an pulverförmigem Natriumdithionit muß hei kleineren Korngrößen mehr organische Flüssigkeit eingesetzt werden, um zu Pasten mit gleichen Viskositäten zu gelangen.

Bei Zahnkolloidmühlen durchwandern die Einsatzstoffe einen sich verengenden Ringspalt, der durch geringfügig unterschiedliche Konizität eines spezialverzahnten Rotors und Stators gebildet wird. In dem stufenlos einstellbaren Ringspalt wird bei hohen Drehzahlen durch intensives Vermischen und Dispergieren die Paste erhalten. Die intensive Dispergierung der viskosen Paste ist mit einer starken Erwärmung der NDTZ verbunden, die auch durch Kühlung des Bereichs hoher Schergefälle nicht vermieden werden kann. Hierdurch können Temperaturen > 85°C erreicht werden, bei denen eine Zersetzung des Natriumdithionit erfolgen kann. Bei dieser Zersetzung wird unter weiterer Wärmeentwicklung Schwefel frei und eine Selbstentzündung des Produktes ist bei Zutritt von Luftsauerstoff gegeben.

Durch die hohen Schergefälle werden außerdem die Pastenteilchen zerkleinert. Für die Erzielung von Viskositäten, die die Pumpbarkeit der Paste gewährleisten, sind dann größere Mengen organischer Flüssigkeit erforderlich. Durch Vergrößerung des konischen Ringspalts kann zwar das Schergefälle und damit die Erwärmung der NDTZ reduziert werden, jedoch wird hierdurch auch die Benetzung der Feststoffteilchen mit der organischen Flüssigkeit und die Homogenität der Paste beeinflußt. Die Folge ist, daß nach kurzzeitigem Lagern die NDTZ sedimentieren und eine Schicht der organischen Flüssigkeit auf der Paste schwimmt. Durch das Entmischen ist die angestrebte Pumpbarkeit der NDTZ nicht mehr gewährleistet.

Bei Rührwerksmühlen, die im allgemeinen geringere Schergefälle als Zahnkolloidmühlen erzeugen, werden bei der kontinuierlichen Herstellung der NDTZ die zuletzt beschriebenen Erscheinungen beobachtet.

In der EP-A- 0 140 218 sind verschiedene Pasten aus NDTZ aufgezeigt, die jedoch alle nur im Labormaßstab hergestellt wurden. In dieser Schrift ist jedoch ein Verfahren zur kontinuierlichen, großtechnischen Herstellung nicht aufgezeigt.

Der vorliegenden Erfindung lag daher die Aufgabe zugrunde, ein kontinuierliches Verfahren bereitzustellen, das einerseits die Herstellung hochkonzentrierter, pumpbarer und sedimentationsfreier NDTZ ermöglicht und mittels dessen andererseits Zersetzungstemperaturen der NDTZ nicht erreicht werden.

Die Aufgabe wird erfindungsgemäß dadurch gelöst, daß pulverförmiges Natriumdithionit und eine gegenüber Natriumdithionit inerte organische Flüssigkeit in einem Intensivmischer, der einem schnellaufenden Einwellenextruder mit Förderschnecken und zwischen den Förderschnecken dazwischengelagerten Misch- und Dispergierelementen entspricht, kontinuierlich gemischt und dispergiert werden.

Anstelle einer organischen Flüssigkeit kann auch ein Gemisch aus zwei oder mehreren organischen Flüssigkeiten verwendet werden.

Das erfindungsgemäße Verfahren ist in der Zeichnung dargestellt und wird im folgenden beispielhaft an der Herstellung von NDTZ näher erläutert.

Figur 1 zeigt ein Verfahrensfließbild des Verfahrens

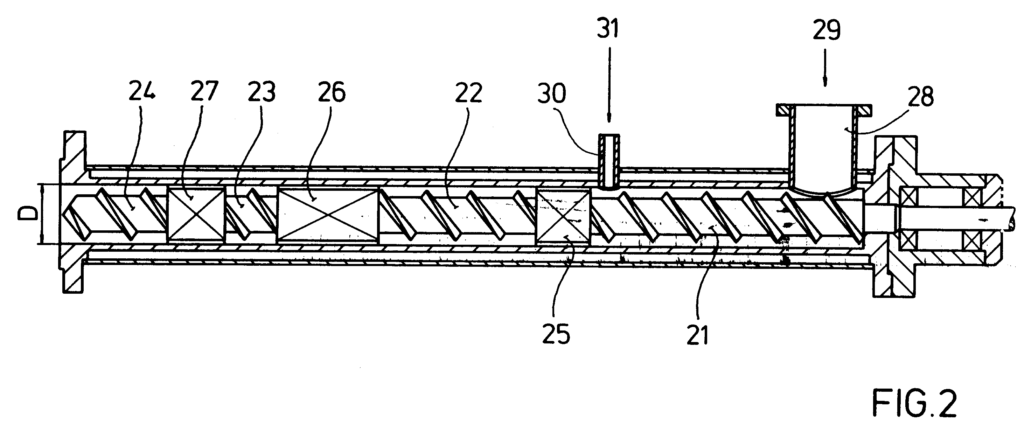

Figur 2 zeigt den für das Verfahren notwendigen Intensivmischer

In dem Behälter 1 wird das pulverförmige Natriumdithionit 2 vorgelegt. Über eine Rohrleitung 3 wird obiges Produkt über eine gravimetrische Dosiereinrichtung 4 dem Intensivmischer 5, bestehend aus Förderschnecken und Misch- und Dispergiereinheiten, zugeführt. Das pulverförmige Natriumdithionit wird in dem Intensivmischer mittels den Förderschnecken stromab gefördert. Vor der ersten Misch- und Dispergiereinheit wird über Einspritzventile 7 die organische Flüssigkeit 8 - gelagert in einem Behälter 9 - mittels einer Zahnradpumpe 10 volumetrisch zudosiert. Der Intensivmischer wird auf der gesamten Länge mittels eines Kühlmittels 11 - vorzugsweise Wasser - gekühlt. Die im Intensivmischer durch intensives Mischen und Dispergieren hergestellte pastenförmige NDTZ 12 werden in einem Kühler 13 auf ca. 30°C gekühlt und anschließend einem Lagerbehälter 14 zugeführt.

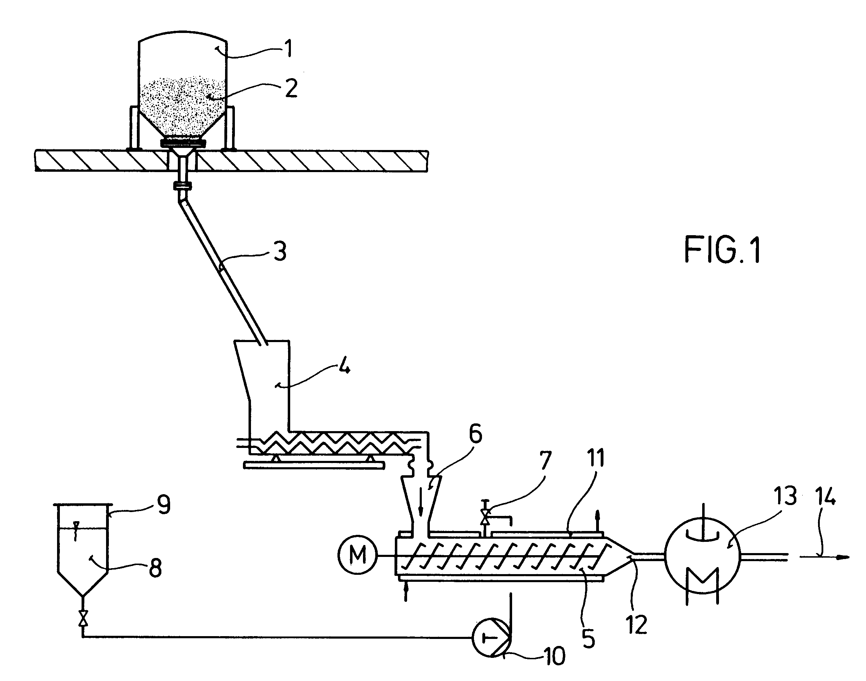

Der bei dem erfindungsgemäßen Verfahren verwendete Intensivmischer - im Verfahrensfließbild der Figur 1 = Nr. 5 - (im folgenden Mischer genannt) entspricht einem schnellaufenden Einwellenextruder mit Förderschnecken (21, 22, 23, 24) und zwischen den Förderschnecken dazwischengelagerten Misch- und Dispergierelementen (25, 26, 27) (im folgenden Mischelement genannt, zeichnerisch nicht im Detail dargestellt). Das Verhältnis Länge : Durchmesser (L:D) des Mischers beträgt ca. 15:1. Der weitere Aufbau des Mischers ist gängiger Maschinenbau und nicht erfindungsrelevant. Die Spaltweiten zwischen Rotor und Stator des Mischelements 25 betragen ca. 2 mm, die Spaltweiten zwischen Rotor und Stator der Mischelemente 26 und 27 hingegen nur ca. 0,5 mm. Das über einen Stutzen 28 zugeführte pulverförmige Natriumdithionit 29 wird mittels der Förderschnecke 21 dem Mischelement 25 zugeführt, wobei gleichzeitig der Druck aufgebaut wird, um das Mischelement 25 zu überwinden. Unmittelbar vor dem Mischelement 25 wird über einen Stutzen 30 eine organische Flüssigkeit oder ein Gemisch aus zwei oder mehreren organischen Flüssigkeiten 31 zudosiert. Mischelement 25 bewirkt eine Vorvermischung. Mittels der beiden Mischelemente 26 und 27 wird die vorgemischte Paste bei einer Drehzahl von 2200 U/min und einem mittleren Schergefälle von 11.500 sek$^{-1}$ dispergiert. Die Mischelemente besitzen keine Förderwirkung und dieselben müssen durch die Förderschnecken 22 und 23 übergeschoben werden. Durch die Abstufung zwischen den Förderschnecken und den Mischelementen konnten höhere Drucke im Dispergierteil des Mischers und das Verpressen der Paste - was evtl. Entmischung der Bestandteile zur Folge hätte - vermieden werden. Durch die in der Austragszone des Mischers angeordnete Förderschnecke wird der Druck zur Überwindung des im nachgeschalteten Kühler und in den Verbindungsrohrleitungen zwischen Mischer und Kühler einerseits und Kühler und Lagerbehälter andererseits auftretenden Druckverlusts aufgebracht. Eine experimentell ermittelte Aufteilung der einzelnen Längen der Förderschnecken und Mischelemente beträgt:

Förderschnecke 21: L = 5D
Förderschnecke 22: L = 3D
Förderschnecke 23: L = 1D
Förderschnecke 24: L = 2D
Mischelement 25: L = 1D
Mischelement 26: L = 2D
Mischelement 27: L = 1D

Die Verweilzeiten im Bereich der Zonen hoher Schergefälle betrugen bei dem Verhältnis L:D = 1:1 ca. 1,4 sek. Ein störungsfreier Betrieb über einen längeren Zeitraum bei einem Durchsatz von 200 kg/h NDTZ bei einem Gesamtdruckverlust von 3,5 bar in der nachfolgenden Kühlzone wurde erreicht. Auch bei Überwindung größerer Druckverluste arbeitete das Verfahren zur Herstellung von NDTZ störungsfrei.

Fördern, Vermischen und Dispergieren der Einsatzstoffe und Pumpen des Fertigproduktes mittels eines Apparates wurde erreicht. Hierin liegt ein besonderer Vorteil des erfindungsgemäßen Verfahrens. Die größte Erwärmung durch Energiedissipation findet im Bereich der Mischelemente statt. Infolge des günstigen Oberflächen-Volumenverhältnis des Mischers wird mittels Kühlung - mit Kühlwasser durchströmter Außenmantel - die entstehende Wärme abgeführt. Eine Absenkung der Temperatur der NDTZ auf Lagertemperatur ist mittels des Mischers nicht erreichbar.

Die vorliegende Aufgabe der Erfindung zur Herstellung einer hochkonzentrierten, pumpbaren, sedimentationsfreien NDTZ wird für das Feststoff-/Flüssigkeitsverhältnis von 85/15 bei der Amalgamware am besten erfüllt. Dieses Verhältnis muß möglichst genau (85 ± 0,5 Gew.%) eingehalten werden. Bei Abweichung von diesem Verhältnis tritt entweder eine Entmischung der Komponenten ein, oder die Paste ist nicht mehr pumpbar. Für die Formiatware mit einer geringeren Teilchengrößenverteilung betrug das optimale Verhältnis 70/30. Bei den Versuchen wurde die wegen der Zersetzung der NDTZ maximal zulässige Temperatur von 85°C unterschritten, bei mehrwöchiger Lagerung konnte für die auf Lagertemperatur abgekühlte NDTZ praktisch keine Sedimentation festgestellt werden und die NDTZ konnten nach dieser Lagerzeit mit Exzenterschnecken einwandfrei dosiert werden.

Es besteht die Möglichkeit, daß der Mischer durch Änderung der Anzahl und Dimensionierung der Mischelemente und der dazugehörenden Förderschnecken verändert werden kann, um beispielsweise andere organische Flüssigkeiten zu verarbeiten.

**Patentansprüche**

1. Verfahren zur Herstellung von hochkonzentrierten, pumpbaren, sedimentationsfreien Hydrosulfitpasten aus festen und flüssigen Einsatzstoffen, dadurch gekennzeichnet, daß pulverförmiges Natriumdithionit und eine gegenüber Natriumdithionit inerte organische Flüssigkeit in einem Intensivmischer, der einem schnellaufenden Einwellenextruder mit Förderschnecken und zwischen den Förderschnecken dazwischengelagerten Misch- und Dispergierelementen entspricht, kontinuierlich gemischt und dispergiert werden.

2.  Verfahren nach Anspruch 1, dadurch gekennzeichnet, daß anstelle einer organischen Flüssigkeit ein Gemisch aus zwei oder mehreren organischen Flüssigkeiten verwendet wird.

**Claims**

1.  A process for producing a highly concentrated, pumpable, sedimentation-free hydrosulfite paste from a solid and a liquid constituent, which comprises continuously mixing and dispersing pulverulent sodium dithionite and an organic liquid which is inert toward sodium dithionite in a high-intensity mixer which corresponds to a high-speed single-shaft extruder with conveyor screws and mixing and dispersing elements located between said screws.

2.  A process as claimed in claim 1, wherein a mixture of two or more organic liquids is used instead of an organic liquid.

**Revendications**

1.  Procédé de préparation de pâtes d'hydrosulfite à haute concentration, pompables et libres de sédimentation à partir de matières de charge solides ou liquides caractérisé par la fait que l'on disperse et mélange en continu du dithionite de sodium et un liquide organique, inerte à l'égard du dithionite de sodium, dans un mélangeur à haut rendement, qui correspond à une boudineuse à grande vitesse, à un arbre et vis d'alimentation et éléments de mélange et de dispersion interposés entre les vis d'alimentation.

2.  Procédé selon la revendication 1, caractérisé par le fait que, au lieu d'un liquide organique, on utilise un mélange de deux ou plusieurs liquides organiques.

FIG.1

FIG.2

EP 0 291 846 B1